# EUROPEAN PATENT APPLICATION

(11) **EP 4 472 016 A1**
(43) Date of publication of application: **04.12.2024**
(21) Application number: 24162213.3
(22) Date of filing: 08.03.2024
(51) Int. Cl.: H02J 7/00, H02J 7/34, H02J 7/35

(54) **PORTABLE POWER SUPPLY DEVICE**

(30) Priority: 31.05.2023 CN 202310646133
(71) Applicant: Nanjing Chervon Industry Co., Ltd., Nanjing, Jiangsu 211106 (CN)
(72) Inventor: HUANG, He, Nanjing (CN)
(74) Representative: Sun, Yiming

(57) **Abstract**

A portable power supply device includes a housing; a power battery; an electrical energy input terminal into which at least electrical energy for charging the power battery is inputted; a first output terminal configured to be capable of being connected to at least a battery pack; and a second output terminal configured to be capable of being connected to at least a direct current (DC) power tool. The power battery is built into the housing, the first output voltage of the first output terminal is less than the second output voltage of the second output terminal, and the first output voltage is greater than 20 V.

## Description

### TECHNICAL FIELD

The present application relates to an energy device and, in particular, to a portable power supply device and a power tool system.

### BACKGROUND

When a power tool is used in some places with inconvenient access to electricity, a gasoline engine is generally used to generate power to supply power to the power tool or to charge a battery pack used by the tool. On the one hand, the development of the gasoline engine may be restricted, and on the other hand, the operating noise of the gasoline engine is very loud. To solve this problem, a high-voltage and high-power battery pack may be used to supply power to the power tool, but this also means that the overall volume of a power tool body and the battery pack becomes larger, and the convenience of operation is reduced.

This part provides background information related to the present application, which is not necessarily the existing art.

### SUMMARY

An object of the present application is to solve or at least alleviate part or all of the preceding problems. For this reason, an object of the present application is to provide a portable power supply device that is convenient for charging and has a long battery life.

To achieve the preceding object, the present application adopts the technical solutions described below.

A portable power supply device includes a housing; a power battery; an electrical energy input terminal into which at least electrical energy for charging the power battery is inputted; a first output terminal configured to be capable of being connected to at least a battery pack; and a second output terminal configured to be connected to at least a direct current (DC) power tool. The power battery is built into the housing; the first output voltage of the first output terminal is less than the second output voltage of the second output terminal; and the first output voltage is greater than 20 V.

In an example, the rated voltage of the power battery is greater than or equal to 100 V.

In an example, the total energy of the power battery is greater than or equal to 1 kWh.

In an example, the electrical energy input terminal includes an alternating current (AC) charging terminal.

In an example, the electrical energy input terminal includes a photovoltaic charging terminal.

In an example, the portable power supply device includes an electrical energy conversion unit configured to convert the electrical energy inputted from the electrical energy input terminal into electrical energy for charging the battery pack.

In an example, the electrical energy conversion unit is further used for converting the electrical energy of the power battery into the electrical energy for charging the battery pack.

In an example, the electrical energy conversion unit is further used for converting the electrical energy of the battery pack into the electrical energy for charging the power battery.

In an example, the portable power supply device includes a power charging circuit configured to convert the electrical energy inputted from the electrical energy input terminal into the electrical energy for charging the power battery.

In an example, the power battery is configured to be capable of outputting the electrical energy to the second output terminal.

In an example, the second output terminal is capable of being connected to a battery pack adapter, and the battery pack adapter is used for connecting the power tool.

In an example, the portable power supply device further includes a third output terminal, where the output voltage of the third output terminal is greater than or equal to 200 V.

In an example, the third output terminal is used for connecting an inverter, and the inverter is connected to an AC electrical device.

In an example, the portable power supply device includes an inverter module, where the inverter module is connected between the power battery and the third output terminal and used for outputting AC electrical energy.

In an example, the power battery includes a lithium iron phosphate battery.

A portable power supply device includes a housing; a power battery; an electrical energy input terminal into which at least electrical energy for charging the power battery is inputted; a first output terminal configured to be capable of being connected to at least a battery pack; and a second output terminal configured to be connected to at least a DC power tool. The first output voltage of the first output terminal is greater than 20 V; and the second output voltage of the second output terminal is greater than or equal to 100 V.

In an example, the power battery is built into the housing.

In an example, the power battery is detachably mounted to the housing.

In an example, the portable power supply device is a backpack power supply device.

In an example, the portable power supply device is a wheeled power supply device.

In an example, the portable power supply device further includes an Internet of Things (IoT) module, where the loT module is configured to perform data interaction with at least an external terminal device.

In an example, the IoT module supports at least one of a Bluetooth communication protocol, a Wi-fi communication protocol, a cellular network communication protocol, a Zigbee communication protocol, a low-speed wireless personal area network based on IPv6, a serial communication protocol, and an Ethernet-based communication protocol.

In an example, the portable power supply device further includes a display module at least used for displaying the power of the power battery.

An AC/DC power tool system includes a power tool and a battery pack adapter. The power tool includes a power tool body; an AC input terminal configured to be connected to an AC power supply; and a DC input terminal configured to be connected to a battery pack or the battery pack adapter. The tool system further includes a portable power supply device. The portable power supply device includes a housing; a power battery; an electrical energy input terminal into which at least electrical energy for charging the power battery is inputted; a first output terminal configured to be capable of being connected to at least the battery pack; and a second output terminal configured to be connected to at least the power tool. The first output voltage of the first output terminal is greater than 20 V; the second output voltage of the second output terminal is greater than or equal to 100 V; and an input terminal of the battery pack adapter is configured to be connected to the second output terminal of the portable power supply device.

### BRIEF DESCRIPTION OF DRAWINGS

FIG. 1 is a schematic view of the system architecture formed by a portable power supply device in an example of the present application;
FIG. 2 is a structural view of a portable power supply device in an example of the present application;
FIG. 3 is a structural view of a battery pack connected to a portable power supply device in an example of the present application; and
FIG. 4 is a schematic view of an AC/DC power tool in an example of the present application.

### DETAILED DESCRIPTION

The process of using a traditional oil engine to generate power for a power tool is very noisy, and the minimum decibel level is generally 60 decibels. Being in this working environment for a long time has adverse effects on the health of the operator. Compared with the oil engine, a portable power supply device 100 in the present application is significantly less noisy. In an example, the operating noise of the portable power supply device 100 is less than or equal to 55 decibels, less than or equal to 50 decibels, less than or equal to 45 decibels, or less than or equal to 40 decibels.

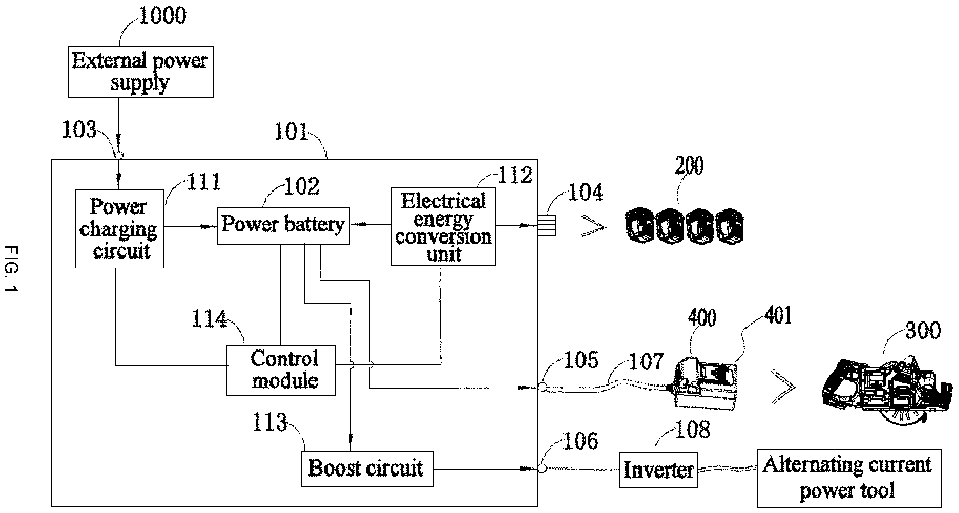

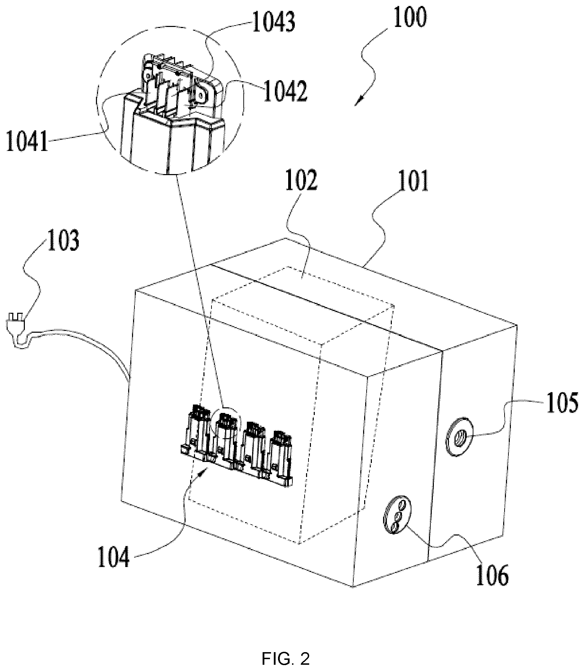

Reference is made to the portable power supply device 100 shown in FIGS. 1 and 2.

The portable power supply device 100 may include a housing 101, a power battery 102, an electrical energy input terminal 103, a first output terminal 104, and a second output terminal 105. In this example, the housing 101 may form a cubic cavity, a cylindrical cavity, or an irregular three-dimensional cavity. The three-dimensional structure of the cavity formed by the housing 101 may basically form the appearance structure of the portable power supply device 100. The cavity formed by the housing 101 may be closed or semi-closed. The present application does not limit the specific shape or structure of the housing 101.

In this example, at least one power battery 102 is mounted on the portable power supply device 100. In an example, the power battery 102 is mounted in the cavity formed by the housing 101. Alternatively, the power battery 102 may be fixedly mounted in the housing 101 or detachably mounted in the housing 101. Alternatively, a mounting portion is formed on the housing 101 and used for mounting the power battery 102. The installation manner in which the power battery 102 is mounted to the portable power supply device 100 and the installation position are not specifically limited in this example.

In an example, the power battery 102 may be a lithium iron phosphate battery, a capacitor battery, a ternary lithium battery, a sodium-ion battery, a battery in which at least two cell materials are mixed, or a supercapacitor. In an example, the rated voltage of the power battery 102 is greater than or equal to 100 V, greater than or equal to 50 V, or greater than or equal to 120 V.

In an example, the total energy of the power battery 102 is greater than or equal to 2 kWh, the total energy of the power battery 102 is greater than or equal to 1 kWh, the total energy of the power battery 102 is greater than or equal to 800 Wh, the total energy of the power battery 102 is greater than or equal to 3 kWh, the total energy of the power battery 102 is greater than or equal to 4 kWh, the total energy of the power battery 102 is greater than or equal to 5 kWh, or the total energy of the power battery 102 is greater than or equal to 6 kWh.

In an example, the total capacity of the power battery 102 is greater than or equal to 20 Ah, the total capacity of the power battery 102 is greater than or equal to 40 Ah, or the total capacity of the power battery 102 is greater than or equal to 50 Ah.

In an example, the output power of the power battery 102 is greater than or equal to 5000 W, the output power of the power battery 102 is greater than or equal to 5500 W, the output power of the power battery 102 is greater than or equal to 6000 W, the output power of the power battery 102 is greater than or equal to 6500 W, or the output power of the power battery 102 is greater than or equal to 7000 W

The electrical energy input terminal 103, the first output terminal 104, and the second output terminal 105 may be formed on the housing 101. The electrical energy input terminal 103 may be connected to at least an external power supply 1000 so as to charge the power battery 102. In an example, the electrical energy input terminal 103 is an AC charging terminal and can be connected to AC mains power so as to charge the power battery 102. Alternatively, the electrical energy input terminal 103 is a photovoltaic charging terminal and can be connected to a solar panel so as to charge the power battery 102 using solar energy. Alternatively, the electrical energy input terminal 103 may include both the AC charging terminal and the photovoltaic charging terminal, and a user may choose an appropriate method to charge the power battery 102 according to the needs. That is to say, the external power supply 1000 that can charge the portable power supply device 100 may be AC mains power, a photovoltaic charging panel, or other types of power supplies, which are not limited here. It is to be understood that the portable power supply device 100 includes a power charging circuit 111 connected between the electrical energy input terminal 103 and the power battery 102. Different types of electrical energy input terminals 103 correspond to different power charging circuits 111. Alternatively, the power charging circuit 111 may have at least two charging paths, and different types of electrical energy input terminals 103 may be controlled to correspond to different charging paths through a switching element. The circuit structure of the power charging circuit 111 is not described in detail in this example.

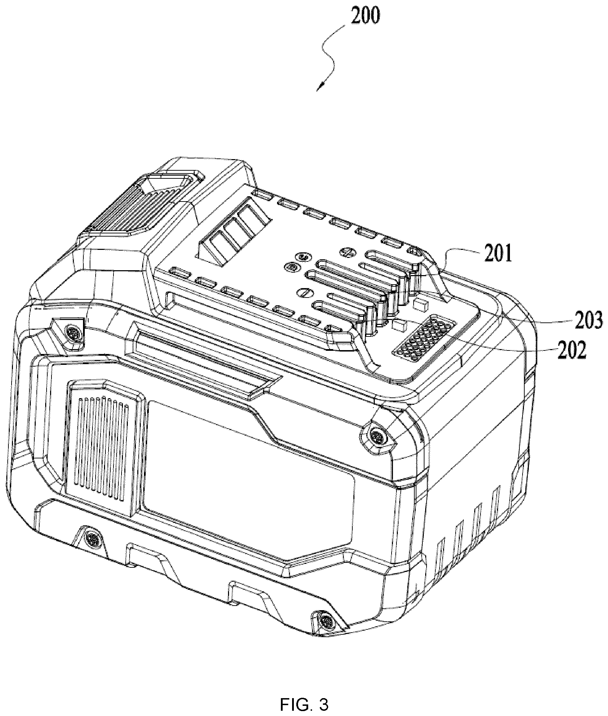

The first output terminal 104 can be connected to at least one battery pack 200. As shown in FIG. 2, the first output terminal 104 includes four connection terminals arranged in parallel and can be connected to four battery packs 200. In other examples, multiple connection terminals may be disposed at different positions of the portable power supply device 100, for example, on different surfaces. With continued reference to FIG. 2, the connection terminal may include a positive connection piece 1041, a negative connection piece 1042, and a communication connection piece 1043. The battery pack 200 shown in FIG. 3 includes at least a battery pack terminal formed by a positive connection terminal 201, a negative connection terminal 202, and a communication terminal 203. It is to be understood that the positive connection piece 1041, the negative connection piece 1042, and the communication connection piece 1043 can be connected to the positive connection terminal 201, the negative connection terminal 202, and the communication terminal 203 correspondingly. It is to be understood that the battery pack terminal can match a tool terminal in a DC power tool or an AC/DC power tool so that the battery pack 200 can be connected to the power tool to supply power to the power tool. The AC/DC power tool refers to a power tool that can use both AC and DC as the power supply. For example, an electric circular saw, a grinder, or the like may be a tool that can be connected to AC mains power and a tool that plugs in the battery pack or a battery pack adapter and is powered using DC. In this example, for the structure of a power terminal of the portable power supply device 100, reference may be made to the tool terminal design on the power tool, or reference may be made to the battery pack terminal design on the battery pack 200.

In an example, the first output terminal 104 may simultaneously charge multiple battery packs 200 of different types or simultaneously receive the electrical energy outputted from multiple battery packs of different types. The battery packs of different types may have different rated voltages and different output powers.

In this example, the first output voltage of the first output terminal 104 is greater than 20 V. In an example, the first output voltage of the first output terminal 104 is greater than 24 V, the first output voltage of the first output terminal 104 is greater than 30 V, or the first output voltage of the first output terminal 104 is greater than 50 V.

With continued reference to FIG. 1, the portable power supply device 100 further includes an electrical energy conversion unit 112. The electrical energy conversion unit 112 can perform AC-DC conversion, DC-AC conversion, boost conversion, buck conversion, filtering processing, noise reduction processing, rectification, or the like on the electrical energy. In an example, the electrical energy conversion unit 112 can convert the electrical energy inputted from the electrical energy input terminal 103 and output the converted electrical energy to the first output terminal 104 to charge the battery pack 200. In an example, the electrical energy conversion unit 112 can convert the electrical energy of the power battery 102 and output the converted electrical energy to the first output terminal 104 to charge the battery pack 200. That is to say, the battery pack 200 may be charged using AC mains power or solar energy through the portable power supply device 100, or the battery pack 200 is charged using the power battery 102 in the portable power supply device 100. In the reverse direction, the battery pack 200 can charge the power battery 102 after being connected to the portable power supply device 100. For example, the electrical energy conversion unit 112 can convert the electrical energy of the battery pack 200 into the electrical energy for charging the power battery 102. That is to say, the electrical energy conversion unit 112 can control the flow direction of the electrical energy within the portable power supply device 100. For example, the portable power supply device 100 is provided with a function selection switch (not shown). Through the function selection switch, the user may select whether to use the portable power supply device 100 to charge the battery pack 200 or use the battery pack 200 to charge the power battery 102. It is to be noted that the one-way arrow connection line or the two-way arrow connection line in FIG. 1 represents the flow direction of a strong current, and the connection line without an arrow may represent a signal line, a communication line, or a control line on which a certain weak current exists. Strong current generally represents power energy, and weak current is generally used for information transmission.

In an example, the electrical energy conversion unit 112 and the preceding power charging circuit 111 may be independent circuit modules. In an example, the electrical energy conversion unit 112 and the power charging circuit 111 share at least one circuit module. The circuit design within the portable power supply device 100 is not specifically limited in the present application.

In the present application, after the battery pack 200 is mounted to the first output terminal 104 and fully charged, the battery pack 200 may be detached to supply power to different power tools. Alternatively, instead of being detached, the battery pack 200 may be mounted on the portable power supply device 100 and used as a backup power supply of the portable power supply device 100. It can be seen from the preceding examples that the battery pack 200 can reversely charge the power battery 102 through the electrical energy conversion unit 112. Therefore, when the power battery 102 is low on power, multiple battery packs 200 may be used to charge the power battery 102. When enough battery packs 200 that are basically fully charged are carried, the battery life of the portable power supply device 100 can be ensured even in places where AC mains charging is inconvenient.

The second output terminal 105 can be connected to a power tool 300 so as to supply power to the power tool 300. The power tool 300 may be the DC power tool or the AC/DC power tool, that is, a power tool that can use both the DC power supply and the AC power supply. In an example, the second output terminal 105 may be a connection terminal derived from a high-voltage DC power cord. Alternatively, the second output terminal 105 can be connected to a high-voltage DC power cord 107 and can be connected to a battery pack adapter 400 through the power cord. The battery pack adapter 400 is connected to the power tool 300 through an adapter terminal 401. It is to be understood that the adapter terminal may be basically consistent with the battery pack terminal of the battery pack 200. The battery pack adapter 400 may be considered to be a terminal conversion device. The port of the second output terminal 105 cannot be directly connected to the tool terminal of the power tool 300 but can be connected to the battery pack adapter 400, and the battery pack adapter 400 has the adapter terminal with the same structure as the battery pack terminal. Therefore, the battery pack adapter 400 is used as the terminal conversion device between the second output terminal 105 and the power tool 300. Since the battery pack adapter 400 does not include an energy storage module, the battery pack adapter 400 is lighter than the battery pack. Therefore, although the connecting wire between the power tool 300 and the portable power supply device 100 is added, the weight of the tool is reduced, and the battery life of the DC tool is greatly improved; or the normal operation of the AC/DC power tool in places without AC power supply conditions and the battery life can be ensured.

In this example, the output voltage of the second output terminal 105 is greater than or equal to 100 V. In an example, the output voltage of the second output terminal 105 is greater than or equal to 120 V.

In this example, the second output terminal 105 is directly connected to the power battery 102. That is to say, the portable power supply device 100 can directly output the electrical energy of the power battery 102 to the power tool 300 through the second output terminal 105 or the high-voltage DC power cord without the need to set up a voltage conversion module between the power battery 102 and the second output terminal 105 so that the utilization rate of the power battery 102 is ensured.

In an example, the portable power supply device 100 further includes a third output terminal 106. The third output terminal 106 can output high-voltage DC so as to supply power to a high-voltage tool. In an example, the output voltage of the third output terminal 106 is greater than or equal to 200 V, or the output voltage of the third output terminal 106 is greater than or equal to 220 V. In this example, the third output terminal 106 may be connected to an external inverter 108 and connected to an AC power tool through the inverter 108. The inverter can invert the high-voltage DC outputted from the third output terminal 106 into AC. In this example, a boost circuit 113 may be disposed between the third output terminal 106 and the power battery 102 and used for boosting the electrical energy outputted to the third output terminal 106. In this example, the third output terminal 106 may be hardwired to the inverter through an interface such as a snap groove, a snap catch, or a connection piece. That is to say, the third output terminal 106 may include at least one hardwired structure such as the snap groove, the snap catch, or the connection piece.

In an example, the portable power supply device 100 may have a built-in inverter module (not shown), where an output terminal of the inverter module is connected to the third output terminal 106, and an input terminal of the inverter module may be connected to the power battery 102, the electrical energy input terminal 103, or the power charging circuit 111.

In the present application, the portable power supply device 100 is used as a portable power station, which can not only charge the battery pack 200 but also supply power to power tools of different types. It is to be understood that the portable power supply device 100 may be used as a power station to supply power to the power tool; or after being charged by the portable power supply device 100, the battery pack 200 may supply power to the power tool; or the power battery 102 may be detached from the portable power supply device 100 to supply power to the power tool. In an example, two or three of the first output terminal 104, the second output terminal 105, and the third output terminal 106 may work simultaneously. For example, the first output terminal 104 may be used to charge the battery pack 200 while the second output terminal 105 may be connected to the battery pack adapter 400 so as to supply power to the power tool 300.

The power tool involved in the present application may be a handheld power tool, such as a drill, a hedge trimmer, or a sander. Alternatively, the power tool may be a table tool, such as a table saw or a miter saw. Alternatively, the power tool may be a push power tool, such as a push mower or a push snow thrower. Alternatively, the power tool may be a riding power tool, such as a riding mower, a riding vehicle, or an all-terrain vehicle. Alternatively, the power tool may be a robotic tool, such as a robotic mower or a robotic snow thrower. In some examples, the power tool may be an electric drill, an electric lamp, an electric vehicle, or the like. In some examples, the power tool may be a garden tool, such as the hedge trimmer, a blower, a mower, or a chain saw. Alternatively, the power tool may be a decoration tool, such as a screwdriver, a nail gun, a circular saw, or the sander. In some examples, the power tool may be a plant care tool, such as a grass trimmer, the mower, the hedge trimmer, or the chain saw. Alternatively, the power tool may be a cleaning tool, such as the blower, a snow thrower, or a washer. Alternatively, the power tool may be a drill-like tool, such as the drill, the screwdriver, a wrench, or an electric hammer. Alternatively, the power tool may be a saw-like tool, such as a reciprocating saw, a jigsaw, or the circular saw. Alternatively, the power tool may be a table tool, such as the table saw, the miter saw, a metal cutter, or an electric router. Alternatively, the power tool may be a sanding tool, such as an angle grinder or the sander. Alternatively, the power tool may be another tool, such as a lamp or a fan. Of course, the power tool may include another type of household electrical device.

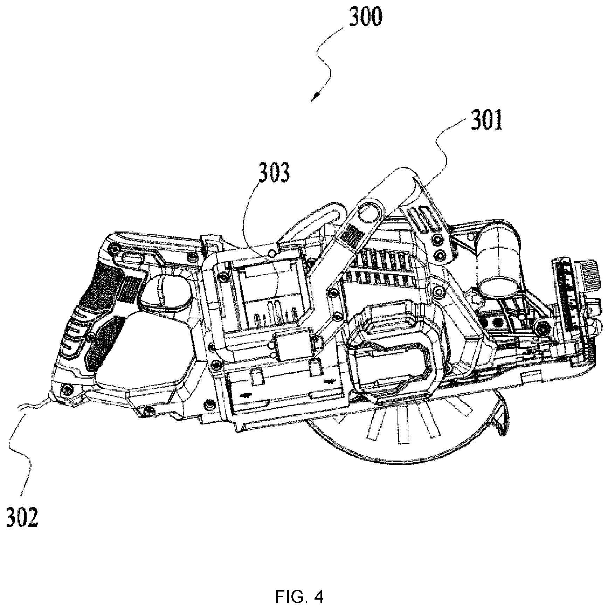

In an example, the power tool 300 as shown in FIG. 4 may be an AC/DC power tool. The power tool 300 includes a power tool body 301, an AC input terminal 302, and a DC input terminal 303. The AC input terminal 302 can be directly connected to a grid interface of AC mains power; or the AC input terminal 302 may be connected to the inverter connected to the third output terminal 106 and powered using the electrical energy provided by the portable power supply device 100. The DC input terminal 303 may be powered by the battery pack 200 or may be connected to the battery pack adapter 400 and powered by the electrical energy outputted from the second output terminal 102.

In an example, the portable power supply device 100 may further include an IoT module (not shown), where the IoT module can perform data interaction with an external intelligent terminal device. In an example, the IoT module may support at least one of a Bluetooth communication protocol, a Wi-fi communication protocol, a cellular network communication protocol, a Zigbee communication protocol, a low-speed wireless personal area network based on IPv6, a serial communication protocol, and an Ethernet-based communication protocol. In this example, the IoT module may be fixedly mounted in the portable power supply device 100 or detachably mounted to the housing 101. In an example, the IoT module may be powered by the power battery 102, or the IoT module has a power supply. In this example, the IoT module may output the connection states of the input terminal and the output terminals of the portable power supply device 100, the electrical parameters of the power battery 102, the electrical parameters of the battery pack 200, or the like to the external intelligent terminal device. In an example, the IoT module may transmit the working state or working condition of the power tool electrically connected to the portable power supply device 100 to the intelligent terminal device.

The terminal application in the intelligent terminal device may display the data transmitted by the portable power supply device 100 so that the user can view the data related to the portable power supply device 100 through the intelligent terminal device. In an example, one intelligent terminal device may be communicatively connected to multiple portable power supply devices 100 and display data to the user, where the data is transmitted by the multiple power supply devices 100. In an example, the user may control the working manner or working state of the portable power supply device 100 through the terminal application. For example, through the terminal application, the user may choose to close or open a certain output port in the portable power supply device 100. The so-called closing means prohibiting the output port from transmitting electrical energy, and opening means allowing the output port to transmit electrical energy.

In an example, the intelligent terminal that can perform data interaction with the IoT module may be a smartphone, a personal digital assistant (PDA) intelligent terminal, a tablet computer, a wearable device such as a smartwatch, or the like.

In an example, the portable power supply device 100 may further include a display module (not shown) for displaying the connection states of the input terminal and the output terminals of the portable power supply device 100, the electrical parameters of the power battery 102, the electrical parameters of the battery pack 200, or the working state or working condition of the power tool electrically connected to the portable power supply device 100. The electrical parameter may include at least one of remaining power, remaining capacity, or output voltage. The display module may include a display screen and a data acquisition circuit or a display circuit mounted under the display screen. In an example, the display screen may be a cathode-ray tube (CRT) display screen or a liquid-crystal display (LCD) display screen, which is not limited here.

In an example, the portable power supply device 100 may be a backpack power supply device. That is to say, the portable power supply device 100 may include backpack straps. In an example, the electrical energy input terminal 103, the first output terminal 104, and the second output terminal 105 may be disposed at an end facing away from a backpack surface or disposed at any other position except the backpack surface. The backpack surface may be understood as a surface that is in direct contact with the back of the user.

In an example, the portable power supply device 100 may be a wheeled power supply device. That is to say, the portable power supply device 100 may include a traveling assembly (not shown), where the traveling assembly is generally disposed at the bottom end of the portable power supply device 100. In an example, the traveling assembly may include two sets of traveling wheels at the front and rear. In an example, by pushing/pulling the portable power supply device 100, the user drives the traveling assembly to rotate so that the portable power supply device 100 is convenient to move to a certain extent. In an example, the portable power supply device 100 may further include a handle device (not shown) so that it is convenient for the user to push/pull the device. In an example, the handle device is foldable.

In an example, the portable power supply device 100 may further include a traveling electric motor (not shown) for driving the traveling wheels to rotate. In this example, the traveling electric motor may be powered by the power battery 102 or the battery pack 200.

In this example, the portable power supply device 100 is provided with a control module 114 electrically connected to at least the power battery 102, the electrical energy conversion unit 112, and the power charging circuit 111. In an example, the control module 114 may control the charging state of the power charging circuit 111 according to the power of the power battery 102. For example, when the power battery 102 is basically fully charged, the control module 114 cuts off the power charging circuit 111. In an example, the electrical energy conversion unit 112 may include a circuit selection switch. When the electrical energy input terminal 103 is not connected to the external power supply, the control module 114 may control the circuit selection switch to turn on the charging circuit between the power battery 102 and the battery pack 200. Alternatively, when the electrical energy input terminal 103 is connected to the external power supply, the control module 114 may control the circuit selection switch to turn off the charging circuit between the power battery 102 and the battery pack 200 and turn on the charging circuit between the electrical energy input terminal 103 and the battery pack 200. In an example, the control module 114 may control the state in which any one of the first output terminal 104, the second output terminal 105, and the third output terminal 106 outputs the electrical energy. For example, the first output terminal 104 is outputting the charging electrical energy provided by the external power supply so as to charge the battery pack 200, the second output terminal 105 is outputting the electrical energy of the power battery 102 to the power tool 300, and when the control module 114 detects that the power of the power battery 102 is relatively low, the control module 114 may control the second output terminal 105 to stop outputting the electrical energy, and the first output terminal 104 is kept to continue outputting the electrical energy. In an example, through the IoT module, the control module 114 may acquire the working parameters or working states of the external devices connected to the ports and may control the working state of the electrical energy conversion unit 112 or the power charging circuit 111 according to the preceding working parameters or working states. For example, if the control module 114 may acquire the full charge state of the battery pack 200 through the IoT module, then the control module 114 may control the electrical energy conversion unit 112 to cut off the charging circuit in the electrical energy conversion unit 112.

In an example, the control module 114 may control the power-assisting state of the traveling electric motor according to the magnitude of the force applied by the user to the handle device, thereby making the user more comfortable when moving the portable power supply device 100. For example, when the force applied by the user to the handle device is relatively large, it means that it is difficult to move the portable power supply device 100 now. When detecting that the force applied by the user is relatively large, the control module 114 may increase the torque of the traveling electric motor, thereby reducing the force applied by the user.

## Claims

1. A portable power supply device (100), comprising:
a housing (101);
a power battery (102);
an electrical energy input terminal (103) configured to at least receive electrical energy for charging the power battery;
a first output terminal (104) configured to be capable of being connected to at least a battery pack; and
a second output terminal (105) configured to be capable of being connected to at least a direct current (DC) power tool (300);
wherein the power battery is built into the housing, a first output voltage of the first output terminal is less than a second output voltage of the second output terminal, and the first output voltage is greater than 20 V.

2. The portable power supply device of claim 1, wherein a rated voltage of the power battery is greater than or equal to 100 V.

3. The portable power supply device of claim 1, wherein total energy of the power battery is greater than or equal to 1 kWh.

4. The portable power supply device of claim 1, wherein the electrical energy input terminal comprises an alternating current (AC) charging terminal.

5. The portable power supply device of claim 1, wherein the electrical energy input terminal comprises a photovoltaic charging terminal.

6. The portable power supply device of claim 1, comprising an electrical energy conversion unit (112) configured to convert the electrical energy received from the electrical energy input terminal into electrical energy for charging the battery pack.

7. The portable power supply device of claim 6, wherein the electrical energy conversion unit is further used for converting the electrical energy of the power battery into the electrical energy for charging the battery pack.

8. The portable power supply device of claim 6, wherein the electrical energy conversion unit is further used for converting the electrical energy of the battery pack into the electrical energy for charging the power battery.

9. The portable power supply device of claim 1, comprising a power charging circuit (111) configured to convert the electrical energy received from the electrical energy input terminal into the electrical energy for charging the power battery.

10. The portable power supply device of claim 1, wherein the power battery is configured to be directly connected to the second output terminal to output the electrical energy.

11. The portable power supply device of claim 1, wherein the second output terminal is capable of being connected to a battery pack adapter (400), and the battery pack adapter is used for connecting the power tool.

12. The portable power supply device of claim 1, further comprising a third output terminal (106), wherein an output voltage of the third output terminal is greater than or equal to 200 V.

13. The portable power supply device of claim 12, wherein the third output terminal is used for connecting an inverter (108), and the inverter is connected to an AC electrical device.

14. The portable power supply device of claim 12, comprising an inverter module, wherein the inverter module is connected between the power battery and the third output terminal and used for outputting AC electrical energy.

15. The portable power supply device of claim 1, wherein the power battery comprises a lithium iron phosphate battery.
